# EUROPÄISCHE PATENTANMELDUNG

(11) **EP 1 375 276 A1**
(43) Veröffentlichungstag der Anmeldung: **02.01.2004**
(21) Anmeldenummer: 03014719.3
(22) Anmeldetag: 27.06.2003
(51) Int. Cl.: B60S 1/38

(54) **Reinigungsvorrichtung**

(30) Priorität: 28.06.2002 DE 10229225
(71) Anmelder: Müller, Hans-Jürgen, 57258 Freudenberg (DE)
(72) Erfinder: Müller, Hans-Jürgen, 57258 Freudenberg (DE)
(74) Vertreter: Grosse, Wolf-Dietrich, Dipl.-Ing.

(57) **Zusammenfassung**

Eine Reinigungsvorrichtung (1) für Fahrzeugscheiben (2), denen ein oder mehrere bewegliche(r) Scheibenwischer (7) zugeordnet ist oder sind, wobei die Reinigungsvorrichtung (1) zumindest einen in Längsrichtung des Scheibenwischers (7) erstreckten und in Funktionsstellung in Kontakt mit der Fahrzeugscheibe (2) stehenden Reinigungskörper (3) umfaßt, wird so ausgebildet, dass in den, aus einem Stück bestehenden Reinigungskörper (3) auf seiner der Fahrzeugscheibe (2) abgewandten Seite eine sich in seiner Längsrichtung erstreckende Aufnahmenut (6) zum Eingriff des Scheibenwischers (7) eingearbeitet ist.

## Beschreibung

Die Erfindung betrifft eine Reinigungsvorrichtung für Fahrzeugscheiben nach dem Oberbegriff des Anspruchs 1.

Reinigungsvorrichtungen der genannten Art können sowohl bei Landfahrzeugen als auch bei Wasser- oder Luftfahrzeugen eingesetzt werden. Sie erfüllen den Zweck, eine Scheibenreinigung insbesondere von aufgeschlagenen Insekten vorzunehmen, ohne dabei Handarbeit ausführen zu müssen. Daher werden derartige Reinigungsvorrichtungen im Wesentlichen zur Reinigung von Kraftfahrzeugwindschutzscheiben angewandt. Auch ein Einsatz in Verbindung mit einem Heckscheibenwischer oder einem Scheinwerferscheibenwischer ist möglich.

Aus der DE 199 04 566 A1 ist eine Anordnung eines Reinigungsschwammes an einem Autoscheibenwischer bekannt, wobei der Schwamm mit dem Wischerblatt neben der Gummilippe des Scheibenwischers durch Klebung, Einschweißung oder Einvulkanisation halterbar ist. Dieses stellt somit eine Sonderkonstruktion dar und schränkt die Einsatzmöglichkeiten ein, da gleichzeitig sowohl die Gummilippe als auch der Reinigungsschwamm ständig - und nicht nur bei Bedarf - an der Scheibe anliegen. Ein Umbau ist zerstörungsfrei nicht möglich. In einer zweiten Ausbildung ist die Halterung des Reinigungsschwammes zwischen zwei Gummilippen eines Doppel-Scheibenwischers vorgesehen. Dieses erfordert jedoch erstens die Verwendung eines teuren Scheibenwischers mit zwei Gummilippen; zudem werden diese im Betrieb durch Anlage an der Scheibe seitlich mit Scherkräften beaufschlagt, so dass die seitliche Klemmung des Schwamms an den Gummilippen nicht sehr zuverlässig ist. Auch hier ist mit dem Schwamm immer gleichzeitig auch die Gummilippe in Anlage an der Scheibe.

Der Erfindung liegt die Aufgabe zugrunde, eine Reinigungsvorrichtung der genannten Art zu schaffen, die hinsichtlich Flexibilität und Halterung des Reinigungskörpers optimiert ist.

Die Erfindung löst diese Aufgabe durch eine Reinigungsvorrichtung mit den Merkmalen des Anspruchs 1. Hinsichtlich vorteilhafter Ausgestaltungen wird auf die abhängigen Ansprüche 2 bis 8 verwiesen.

Erfindungsgemäß ist mit dem Vorsehen einer rückseitigen Aufnahmenut der Reinigungskörper allein durch die Federspannung des Scheibenwischers auf die Scheibe gepreßt und von diesem ohne Verschweißung, Verklebung oder dergleichen jederzeit lösbar gehalten. Es kann daher der Reinigungskörper flexibel nur dann aufgesetzt werden, wenn er wirklich benötigt wird. Beispielsweise kann der Reinigungskörper bei Fahrzeugstillstand verwendet und vor Fahrtantritt entfernt werden. Während des Einsatzes des Reinigungskörpers hat oder haben die Gummilippe(n) des Scheibenwischers keinen Kontakt zur Scheibe, wodurch der Verschleiß der Gummilippe(n) minimiert ist. Diese muß oder müssen nicht über eine verklebte, und trotz in der Regel eingesetzten Wischwassers oft teilweise trockene Scheibe kratzen.

Dadurch, dass die Halterung des Reinigungskörpers auf der Scheibe durch die Preßkraft des Scheibenwischers bewirkt ist, ist diese sehr zuverlässig. Scherkräfte können die Halterung nicht lösen. Zusätzliche Haltemittel für den Reinigungskörper sind nicht zwingend erforderlich.

Eine besonders zuverlässige Halterung ergibt sich, wenn seitlich der Aufnahmenut liegende Bereiche den Scheibenwischer klemmend umgreifen. Die Klemmkraft kann dabei durch den Druck des Scheibenwischers selbst bewirkt oder unterstützt werden. Die den Scheibenwischer, in der Regel das Scheibenwischerblatt und das dieses haltemde Gestänge, umschließenden Schenkel der Aufnahmenut bewirken z.B. bei Anwendung im Winter zudem einen Schutz gegen Scheibenwischervereisung und Schneeanhaftung, so dass der Scheibenwischer seine Flexibilität behält. Wird der Reinigungskörper zudem noch mit Frostschutzmittel getränkt, ergibt sich eine noch bessere Schutzwirkung.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: eine Ansicht einer Reinigungsvorrichtung mit in der Aufnahmenut gehaltenem Scheibenwischer im Querschnitt,
- Fig. 2: eine ähnliche Ansicht wie Fig. 1 unter Einzeichnung der auf die seitlichen Schenkel einwirkenden Preßkraft.

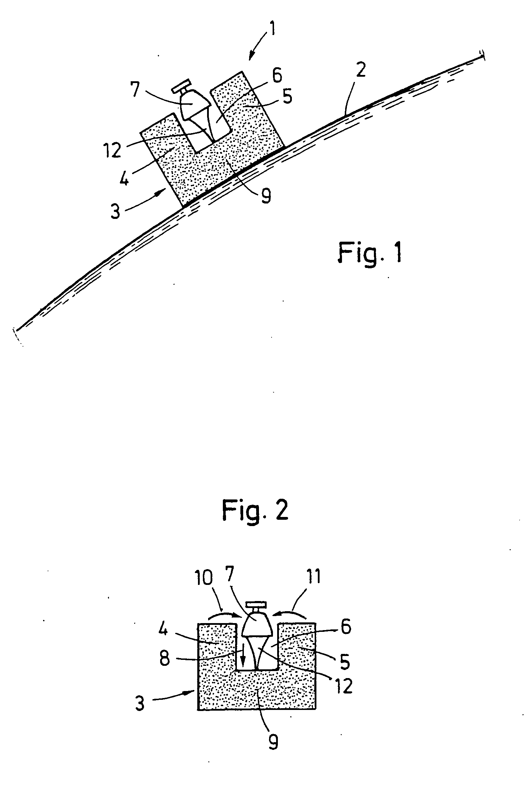

In Fig. 1 ist schematisch eine Reinigungsvorrichtung 1 in Funktionsstellung bei Anlage an eine Fahrzeugscheibe 2 dargestellt. Die Fahrzeugscheibe 2 ist hier eine Autoscheibe, kann aber auch beispielsweise eine Wasserfahrzeugscheibe sein, oder eine LKW-Scheibe, die wegen ihrer in der Regel steilen Stellung auch bei verhältnismäßig geringen Geschwindigkeiten eine große Anzahl von Insekten einfangen. LKW-Scheiben sind zudem recht hoch angeordnet, so dass ein händisches Reinigen sehr beschwerlich ist.

Die Reinigungsvorrichtung 1 umfaßt einen Reinigungskörper 3, der im Querschnitt vorzugsweise U-förmig ausgebildet ist, wobei zwischen den Schenkeln 4, 5 eine Aufnahmenut 6 zum Eingriff eines Scheibenwischers 7 ausgebildet ist. Dieser preßt durch seine fedemde Lagerung den Reinigungskörper 3 mit einer Kraft in Richtung des Pfeils 8 auf die Scheibe 2. Der Reinigungskörper 3 ist einstückig ausgebildet. Es ist jedoch auch möglich, zusätzliche Halteklammem oder dergleichen Haltemittel vorzusehen. Eine besonders günstige Halterung ergibt sich, wenn, wie in Figur 2 dargestellt, durch Druck des Scheibenwischers 7 in Richtung des Pfeils 8 auf das Joch 9 die Schenkel 4, 5 des Reinigungskörpers 3 eine Klemmkraft in Richtung der Pfeile 10, 11 auf den Scheibenwischer 7 ausüben.

Der Reinigungskörper 3 ist als offenporiger PU-Schwamm ausgebildet, der durch Flüssigkeitseinwirkung an Härte verliert. In Frage kommt beispielsweise ein halbharter Prepolymer-Polyurethanschaum auf Polyester-Basis mit einer groben, offenporigen Struktur. Bei diesem Material ist trotz des Drucks des Scheibenwischers 7 auf das Joch 9 eine Beschädigung der Gummilippe(n) 12 des Scheibenwischers 7 ausgeschlossen. Es zeigt eine gute Abrieb- und Rißfestigkeit. Ein einstückiger Schwamm dieser Art kann beispielsweise extrudiert werden. Ein anschließendes Schneiden der in größeren Längen vertreibbaren Reinigungskörper 3, etwa um die Länge des Reinigungskörpers 3 an verschiedene Fahrzeug- und damit Scheibenwischertypen anzupassen, ist möglich. Es kann aber auch im Zubehörhandel ein Sortiment von Reinigungsvorrichtungen 1 vorgehalten werden, deren Längen individuell auf Fahrzeugtypen abgestimmt sind.

Im gezeichneten Ausführungsbeispiel ist die Grundform des Reinigungskörpers 3 ohne Berücksichtigung der Aufnahmenut 6 im Querschnitt rechteckig. Es kommen auch andere Grundformen in Betracht, zum Beispiel eine dreieckige, quadratische, elliptische oder kreisförmige, aus der dann jeweils die Aufnahmenut 6 ausgenommen ist.

Das Schneiden des Rohlings muß nicht allein die Längserstreckung des Reinigungskörpers 3, sondem kann auch die Höhe und Breite der Aufnahmenut 6 betreffen, so dass auch diese individuell an verschiedene Scheibenwischertypen anpaßbar ist. Es ist möglich, dass die Schenkel 4, 5 nach Art einer Schwalbenschwanzführung zu ihren freien Enden hin konisch erweiternd geschnitten sind und so eine besonders enge und stabile Einfassung des Scheibenwischers 7 bewirken. Unter Umständen kann es erforderlich sein, einen derartigen Reinigungskörper 3 längs der Erstreckungsrichtung des Scheibenwischers 7 auf diesen aufzuziehen, während es bei einer breiteren Aufnahmenut 6 möglich ist, den Reinigungskörper 3 bei abgehobenem Scheibenwischer 7 auf die Scheibe 2 aufzulegen und dann den Scheibenwischer 7 zurückzuklappen, so dass er in die Nut 6 eingreift.

Es ist zudem möglich, dass die Aufnahmenut insgesamt als geschlossener Kanal ausgebildet ist, die den eingeschobenen Scheibenwischer 7 dann umschließt.

Der Betrieb der Reinigungsvorrichtung 1 kann in erster Linie bei stillstehendem Fahrzeug vorgesehen sein. Dabei kann der Reinigungskörper 3 entweder durch die Scheibenwaschanlage oder durch ein extern aufgetragenes Reinigungsmittel getränkt sein. Der Reinigungskörper 3 kann dann vor Weiterfahrt entfernt und etwa im Kofferraum mitgeführt werden. Ein Ausdrücken des schwammartigen Reinigungskörpers 3 ist möglich. Es ist des weiteren, insbesondere bei langsamen Wasserfahrzeugen oder bei Straßenfahrzeugen, bei denen die Scheibenwischer 7 hinter einer Kante der Motorhaube vor Fahrtwind geschützt liegen, möglich, die Reinigungsvorrichtung 1 vor Fahrtantritt nicht zu entfernen, sondern sie auf dem Wischerblatt zu belassen.

Ein Betrieb während der Fahrt kann dann auch bei langsamer Geschwindigkeit möglich sein, um dadurch frühzeitig etwa aufprallende Insekten entfernen und das Entstehen eines schwer entfernbaren Belags verhindern zu können.

Es kann zusätzlich für den Winterbetrieb vorgesehen sein, den Reinigungskörper 3 mit einem Frostschutzmittel zu tränken und dadurch ein Anfrieren der Gummilippe(n) 12 des Scheibenwischers 7 an der Fahrzeugscheibe 2 zu verhindern. Ein solcher Schutz kann auch über Nacht oder längere Zeit auf dem Scheibenwischer 7 verbleiben.

In gleicher Weise kann auch die Gummilippe 12 eines Einfachscheibenwischers 7 oder die zwei parallel liegenden Gummilippen 12 eines Doppelscheibenwischers 7 vor direkter Sonneneinstrahlung durch den aufgesteckten oder aufgeschobenen Reinigungskörper 3 geschützt sein.

### Bezugszeichenliste:

- 1: Reinigungsvorrichtung,
- 2: Fahrzeugscheibe,
- 3: Reinigungskörper,
- 4: Schenkel,
- 5: Schenkel,
- 6: Aufnahmenut,
- 7: Scheibenwischer,
- 8: Pfeil
- 9: Joch,
- 10: Pfeil,
- 11: Pfeil,
- 12: Gummilippe

## Patentansprüche

1. Reinigungsvorrichtung (1) für Fahrzeugscheiben (2), denen ein oder mehrere bewegliche(r) Scheibenwischer (7) zugeordnet ist oder sind, wobei die Reinigungsvorrichtung (1) zumindest einen in Längsrichtung des Scheibenwischers (7) erstreckten und in Funktionsstellung in Kontakt mit der Fahrzeugscheibe (2) stehenden Reinigungskörper (3) umfaßt,
**dadurch gekennzeichnet,**
**dass** in den, aus einem Stück bestehenden Reinigungskörper (3) auf seiner der Fahrzeugscheibe (2) abgewandten Seite eine sich in seiner Längsrichtung erstreckende Aufnahmenut (6) zum Eingriff des Scheibenwischers (7) eingearbeitet ist.

2. Reinigungsvorrichtung nach Anspruch 1,
**dadurch gekennzeichnet,**
**dass** die seitlich der Aufnahmenut (6) gelegenen Schenkel (4; 5) des Reinigungskörpers (3) den Scheibenwischer (7) klemmend und schützend umgreifen.

3. Reinigungsvorrichtung nach einem der Ansprüche 1 oder 2,
**dadurch gekennzeichnet,**
**dass** der Reinigungskörper (3) einen im wesentlichen U-förmigen Querschnitt aufweist, wobei der Raum zwischen den Schenkeln (4; 5) die Aufnahmenut (6) bildet.

4. Reinigungvorrichtung nach einem der Ansprüche 1 bis 3,
**dadurch gekennzeichnet,**
**dass** der Reinigungskörper (3) ein offenporiger Schwamm ist.

5. Reinigungsvorrichtung nach einem der Ansprüche 3 oder 4,
**dadurch gekennzeichnet,**
**dass** der Reinigungskörper (3 aus Polyurethan besteht.

6. Reinigungsvorrichtung nach einem der Ansprüche 1 bis 5,
**dadurch gekennzeichnet,**
**dass** in der Aufnahmenut (6) eine oder mehrere Gummilippe(n) (12) des Scheibenwischers (7) an dem Reinigungskörper (3) anliegt oder anliegen.

7. Reinigungsvorrichtung nach einem der Ansprüche 1 bis 6,
**dadurch gekennzeichnet,**
**dass** in Anpassung an verschiedene Scheibenwischerlängen und -ausgestaltungen ein Sortiment von verschiedenen Reinigungskörpern (3) vorgesehen ist.

8. Reinigungsvorrichtung nach einem der Ansprüche 1 bis 7,
**dadurch gekennzeichnet,**
**dass** der Reinigungskörper (3) mit Frostschutzmittel tränkbar ist.
